# EUROPEAN PATENT APPLICATION

(11) **EP 4 579 971 A1**
(43) Date of publication of application: **02.07.2025**
(21) Application number: 24223384.9
(22) Date of filing: 27.12.2024
(51) Int. Cl.: H02H 11/00, H02H 3/24, H02H 5/10, H01H 83/20

(54) **SERVO-CONTROLLED DEVICE FOR PROTECTING ELECTRIC CURRENT USERS**

(30) Priority: 27.12.2023 IT 202300028005
(71) Applicant: Giacomino, Canale, 16043 Chiavari (Genova) (IT)
(72) Inventor: Giacomino, Canale, 16043 Chiavari (Genova) (IT)
(74) Representative: Nesti, Antonio

(57) **Abstract**

Servo-controlled device for the protection of an electric current utility (Y3) of the type comprising a plug (14) for connection via electric cable to the device, an internal resistance (R2) and a switch (X2) to activate the utility, the device comprising: a first power circuit (Y2) arranged to be supplied upstream from the electricity grid (RE) and to supply the utility downstream (Y3) through a socket (13) that can be connected to the plug (14), including a disconnecting contactor (K) configured to be able to switch from a normal configuration of electrical disconnection of the utility (Y3) to a coupling and powered configuration; a second pilot interlock circuit (Y1) which, if powered, induces and maintains said contactor (K) in the coupling and powered supply state, only in response to a condition of closure of said switch (X2) of the utility, said contactor (K) returning to the electrical disconnection state in emergency conditions such as at least: a drop in the mains voltage, the extraction of the utility's plug from the socket and shearing of the utility's power cord.

## Description

### Field of the Invention

This invention concerns a protection device interposed upstream of fixed or portable electric current utilities and in particular a servo-controlled protection device that has the purpose of conditioning the activation of the power supply to the utility through a manual consent to start and the subsequent switching on of the internal switch of the utility, for example a power tool.

### State of the art

At present, "wired" electrical interlocking circuits are known, which are interposed upstream of a fixed type of utility to intervene in emergency situations, or deliberately, to control the latter situations by means of a power contactor through "start-stop" buttons. These devices are not applicable to mobile or portable utilities as the control device, it being separated from the body of the utility, in order to be used, would have to follow the path of the utility itself.

It is also known that in conditions of deactivation of the utility, i.e. when the electric tool is connected to the protected circuit but is not in operation, at the electrical ends of the utility, there is a low voltage generated by a magnetic induction.

For this reason, if an electric tool is protected by such well-known devices, when it is stationary, for example in the open air, even if it is deactivated, serious dangers may still arise due to the presence of the voltage generated by magnetic induction which is a source of attraction for overcurrent of atmospheric origin.

At present, there are also known documents, in the name of the same applicant, describing a portable safety device made operational by an electrical blocking circuit interposed between the mains power plug and the supply socket, in which the blocked state activation of the circuit is subject to the closure downstream of the same circuit by turning on a switch of the utility.

Devices of this type are described in patent applications EP3128632 and 10201800003934.

However, these well-known devices have some limitations in relation to their effectiveness in terms of completeness of safety in emergency conditions and in terms of compliance with the relevant regulations.

### Aim of the invention

A first purpose of the invention is therefore to overcome the limits of devices of known type and to propose a safety device for portable electricity utilities that is highly reliable and easy to use.

In particular, a purpose of the invention shall be the construction of an emergency stop device which meets the safety requirements set out in section 1.2.4.3. of the European Machinery Directive according to the technical indications of the UNI EN ISO 13850:2015 standard with the aim of avoiding dangerous situations that may occur or that are occurring.

### Summary of the Invention

This purpose has been achieved according to the invention by a device according to at least one of the attached claims, including an electrical equipment circuit downstream of which a portable utility can be interposed which is subject to standing in the open air in conditions of deactivation and which, in these conditions, is effectively isolated from the electrical parts and it is therefore protected against overcurrent of atmospheric origin and against unexpected electrical start up.

In particular, the safety of the protection conferred on the utility is guaranteed by the possibility of checking of the retention status of relays belonging to a pilot circuit that controls the activation of a power circuit including a disconnecting contactor located upstream of the circuit of the portable electrical utility.

For the operator's safety, in addition to disconnecting of the utility's power supply in critical conditions, a further measure against overcurrent of atmospheric origin and against unexpected start-ups is provided according to which, to restart the utility, the restoration of the device's electrical circuit is required through a manual reset of the same circuit. Effectiveness in terms of safety is guaranteed by the functions of the equipment circuit which, in the operation of the device, can meet the regulatory requirements, and in particular:
▪ A first requirement of the regulatory requirements is satisfied through a circuit start-reset function operated by manually pressing of a button by the operator in order to enable the energization of the user, so that following an emergency stop of the power supply to the utility or at the end of the use of the latter, it is impossible to restart the same if the circuit is not restored through the repetition of the aforementioned start-reset function.
• A second requirement is satisfied through the energization of the portable utility in response to its switch-on, and by the activation in this circumstance of the entry into operation of a preventive measure against the risks of imminent dangers or that may occur.
• A third requirement is met by the intervention of the above-mentioned prevention measure in response to the onset of critical situations at the utility, which intervention allows the portable utility to be given a category "zero" emergency power supply shutdown capacity, i.e. in the absence of waiting times.

A first advantage obtained with the invention consists in the high safety regime obtained by the utility, while at the same time it is possible to servo control the activation of the protection circuit by means of the same switch of the electrical utility.

A second advantage obtained consists in the fact that the components used for the construction of the control circuit are electromechanical, and the supply sockets and the plugs of the utility and any extensions of the power cord are of the conventional type and commercially available, The absence of electronic components in the control device of the operating current of the utility provided by the transformer (T), guarantees the certainty of the operation of the latter and consequently of the device.

Conventionally, these types of protections are considerably limited in terms of safety and in technical terms. They are carried out through devices designed to perform individual functions for which several independent devices are necessary.

A further advantage is that the device allows a self-multiplication of the energy demanded from the grid by the power supply T, using a limited number of primary and secondary coils.

A further advantage consists in the fact that in a preferred example of implementation, the advantages conferred by the application make it possible to activate utilities equal to or greater than 15W.

The device also offers the possibility of activating and maintaining in the activated state an electrical utility subject to multiple restarts close together over time.

### List of drawings

These and other advantages will be better understood by each skilled person from the description below and from the attached drawings, given as a non-limiting example, in which:
- fig.1 schematically shows a device according to the invention for the power supply of a portable electrical utility;
- fig.2-5 show the wiring diagram of a preferred form of construction of the device in different operating configurations.

### Detailed Description

With reference to the attached drawings, a protective device according to the invention is described, intended to be interposed upstream of current utilities, of the portable type, for example power tools, in order to supply power to the utility through a manual consent maneuver and the subsequent switching on of the switch of the utility.

As will be better described below, this manual maneuver involves the activation of the utility in such a way that in critical situations, such as overvoltage of atmospheric origin and mains voltage drops, the utility is devoid of any voltage state and disconnected from the power supply, so that unexpected start-ups of the utility are avoided which would constitute a risk for operators, since a manual reset phase of the device is necessary for the restoration of the utility.

In a preferred example of application and particular usefulness of the device, it is also provided that in the case of rapid and repetitive starts up of the user, for example as can happen in normal use of power tools, the need for resetting is shifted to the end of the repetitions of the utility start up.

With reference to the attached drawings, the safety condition for the utility Y3 is guaranteed through a circuit of electrical equipment Y4 including:
a pilot interlock circuit Y1 operationally associated with an appropriate isolation transformer T, and a power circuit Y2 equipped with a K contactor of a type known, powered upstream by the power grid RE.

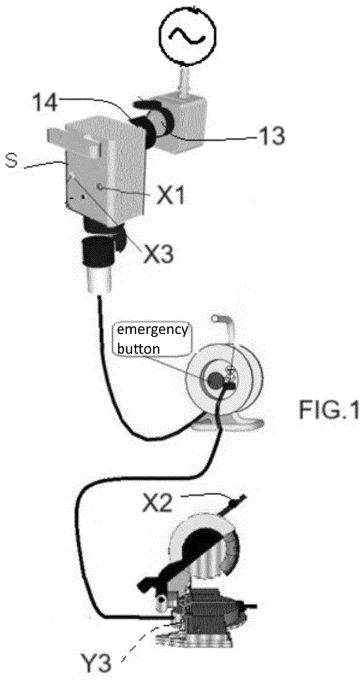

The circuits Y2 and Y1 are enclosed in a containment unit, for example a box S, and are connected downstream with the utility through a supply socket 13 for the insertion of the power plug 14 of an internal circuit of the portable utility Y3 through an electric cable of suitable length, for example a few meters, as shown in fig.1.

More specifically, the power supply of the pilot interlock circuit Y1 is demanded from the grid through a primary H of the transformer T which in turn is energized through a manual impulse given by means of a "run" button X1 of the interlock circuit Y1.

Pressing of the run button X1 activates the excitation of the coil L of a first relay W1 and of the coil of a third relay W3 which, through the closure of the relative contacts 48-49, determines a state of blocking of the same relay and the resistive conduction, through the resistance R1, of the power supply of the primary H of the transformer T.

In this condition, the secondaries B and C of the transformer T are in an inductive relationship with the said primary (H) to demand energy from the grid in electrical isolation regime, allocating it to the energization of the coil (V of W2) to keep the relative contacts (15-16) in a state of retention and consequently the relay (W1) in a state of locking, in order to prepare the coupling of (K) with the consequent energization of the user. With the circuit configuration described, the closure of contacts 36-37 of the first relay W1, now in a locked state, makes the contactor K activatable, i.e. in a condition that can be engaged and remain engaged thanks to the subsequent activation of the coil M by a servo-controlled operation of turning on of the internal switch X2 of the utility Y3.

In fact, switching on of switch X2 closes the circuit of the secondary C of T with the consequent retention closure of contacts 21-22 by the coil P of the pilot relay G which relay in turn performs a pilot action by supplying energy to the coil M of the contactor K determining the maintenance of the engaged state.

At the same time, the power supply of the coil M involves the engagement of K so inducing the the relative contacts 28-29 to open and the fall of the relay W3 which in turn determines the replacement of the primary H of the transformer T with the second primary D.

In this condition, the second primary D, being crossed by the operating current of the utility, acts inductively to power and control the secondaries (B and C) so that the energy supplied by the latter, being controlled, is used to replace the previous energy generated through the primary (H) to keep the pilot relays (W2 and G) and with them the contactor (K) in a state of controlled retention.

In this configuration, the Y3 utility is therefore powered, is able to operate, and is protected by contactor K which is in a "controlled" engaged state;

This state enables a prevention measure that acts in response to the occurrence of at least one of the critical conditions of the utility to actuate a "zero" category emergency shutdown of the power supply.

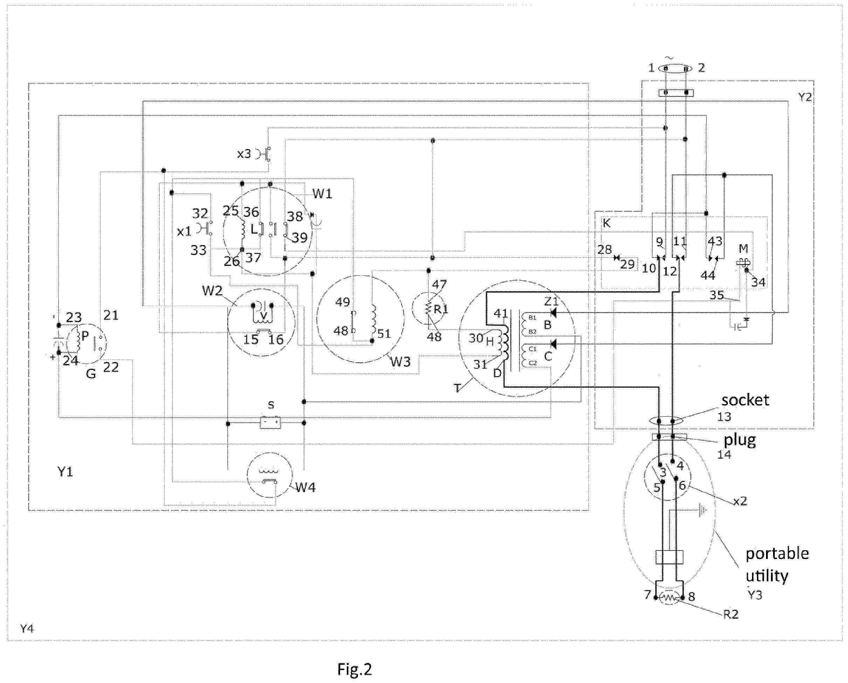

The operation of the device is represented in the circuit configurations of the circuit (Y4) shown in figures 2-5, in which:

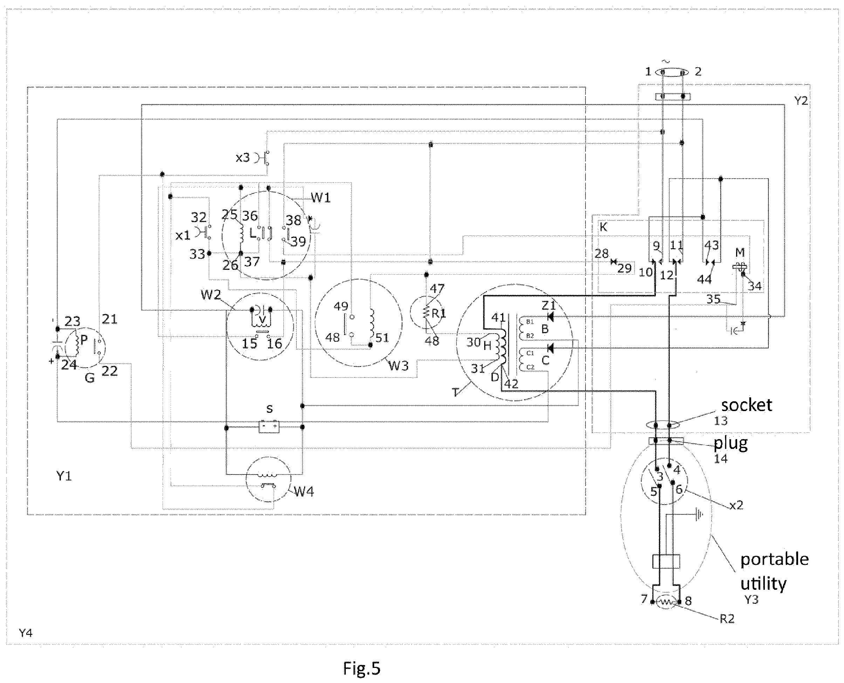

fig.5 - Deactivated initial state
the utility Y3 is deactivated, the contacts of X2 (3-5, 4-6) are open but the utility is electrically connected to the device, you are in the conditions that precede the start-up maneuver and therefore the button X1 is open, the relays W1, W2, W3, G in dropped state and de-energized and the contactor K in the unengaged state with the contacts (9-10 and 11-12 ) open, contacts 43-44 open and contacts 28-29 closed, with the consequent exclusion of the power supply to the contacts at socket 13;
fig.2 - Starting the device.

The X1 button has been pressed and released, contacts 36-37 and 38-39 of W1 and 15-16 of W2 are closed and contacts (48-49 of W3) are closed. **In** this configuration, there is a potential difference at contacts 3, 4 of the switch X2, the contactor K is still unengaged with the contacts (9-10 and 11-12), the contacts (43-44) open and the contacts 28-29 closed but prepared for engagement.

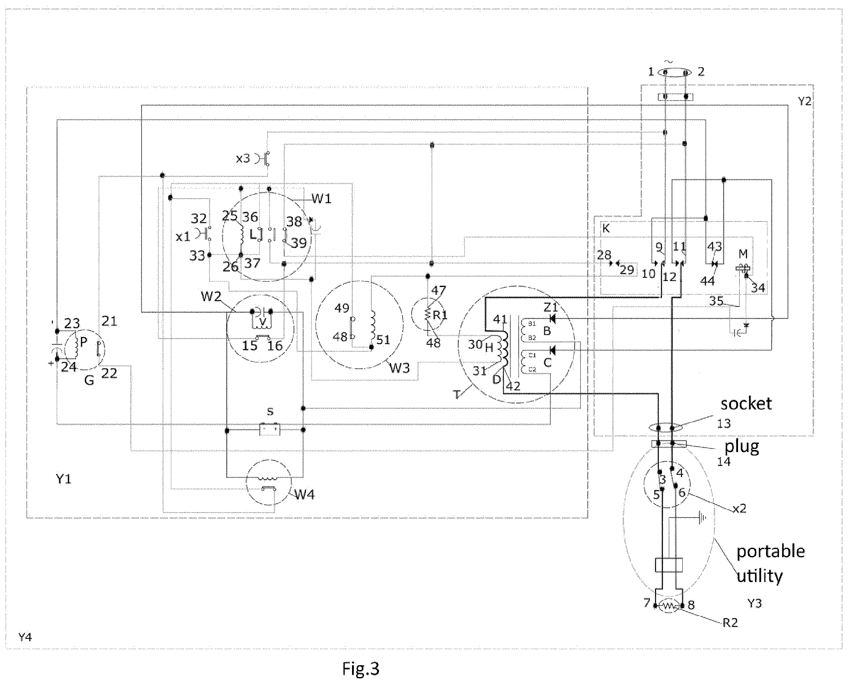

fig.3 - Operational status activated.
the switch X2 of the user Y3 is actuated by an operator so that the relative contacts (3-5 and 4-6) are closed, the relay W1 is interlocked by the retention controlled by the relay W2, the pilot relay G closes the relative contacts (21-22) in controlled retention to pilot the power supply of the coil (M of K) to induce the said contactor into an engagement state in order to close the relative contacts (9-10 and 11-12 and 43-44), and open contacts 28-29. Socket 13 is powered causing the energization of the utility (Y3).

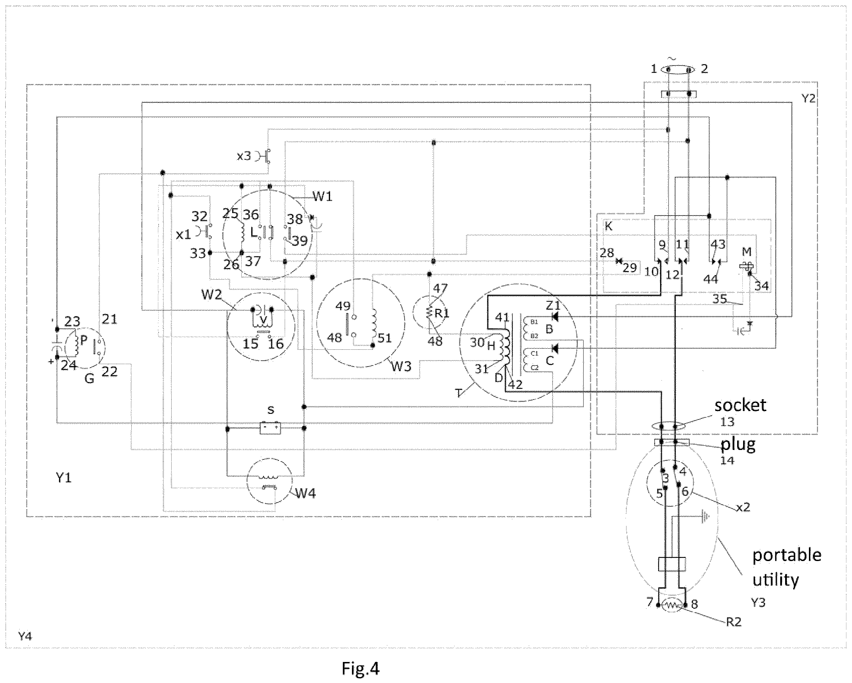

Fig.4 deactivation status

Advantageously according to the invention, starting from the operating condition represented in the mentioned figure 5, in critical situations of the electrical utility due to:
- sudden failure of the mains voltage,
- extraction of the utility's plug from the undercurrent supply socket,
- cutting of the power tool power cord,
the aforementioned prevention action intervenes by suppressing the electric current flow through the coils of the primary (D) to induce the energy supplied by the secondaries (B-C) to fall, thus causing relays W2 and W1 and the pilot relay G to drop, which in turn induces the release state of the contactor K to cause a category "zero" emergency stop of the power supply. This state of the circuit guarantees the isolation of the electrical parts of the utility (Y3) from any type of voltage even if the circuit switch (X2) remains in the activated state with the relative contacts (3-5 and 4-6) in the closed state.

Similarly, in the event of critical conditions of the utility due to overcurrent of atmospheric origin, or due to the exceeding of the threshold limit of the operating load of the utility, the consequent increase in the magnetic effect on the steel core of the transformer (T) caused by the overcurrent running on the coils of the primary (D) induces the secondary (B) to deliver an overvoltage to the coil of a W4 relay to open the relative contacts and cause the relays W2, W1 and G to drop in succession.

A very significant advantage is due to the fact that the power supply shutdown is immediate (without waiting times) considering that the conventional overcurrent shutdown systems are constituted by an autonomous device that acts following the principle of thermal deformation so that the function of resetting after shutdown takes place by means of a manual impulse of a mechanically operated button.

Fig.5 shows the circuit (Y4) deactivated.

This circuit condition occurs at the end of the use of the power tool (Y3) by switching off the switch (X2) to open the relevant contacts (3-5 and 4-6), so returning the circuit (Y4) to the original deactivation state shown in the aforementioned figure (5). Finally, the stop of the electrical circuit Y4 can also be determined voluntarily by the impulse activation of an emergency stop button X3 which causes the relays W3, W2, W1 and G to drop in succession. Advantageously, the disconnection of the utility power supply obtained as described above allows the utility to be restarted only through the phase of the circuit by manually pressing of button X1.

It is therefore evident that the invention has a significant advantage over systems of known type as it is effective in various critical situations of the utility in the activation state because it induces the electrical disconnection of the power supply and imposes the restoration of the circuit through reset.

In fact, these situations concern: a) the sudden drop in the mains voltage, b) the extraction of the user's plug from the undercurrent supply socket, c) the shearing of the utility's power supply cord, d) overcurrent, e) activation of a stop and emergency button, f) accidental fall of the utility with the switch (X2) in an unlocked state.

In a preferred embodiment, the Y1 interlock circuit is configured to avoid the need to reset the circuit when the portable utility is restarted shortly and repeatedly and to postpone this reset need to the end of the repeated utility reboots.

In this case, the interlock circuit Y1 is equipped with a rechargeable battery S placed in parallel at the ends of the coil V of the second relay W2.

In the operation of this preferred example, during the activation time of the utility the battery S is recharged so that at the end of the use of the utility energy remains available to be allocated to restart the utility without having to reset the circuit. Conversely, the non-use of the utility leads to the exhaustion of the accumulated energy and the need to reset the circuit through the X1 button.

The invention has significant advantages for the possibility of remotely controlling, through the Y3 user cable, the activation of the engagement state of the contactor K and therefore the protection status of the utility, requiring only, at the end of a use, a reset phase by means of the restart button X1

According to a further aspect of the invention, further advantages achieved concern the containment of the production costs of the T power supply and for the activation of the pilot system, which allows the use of the Y4 equipment circuit when the power of the portable user is at least 15W.

According to the invention, compared to the known technique of transformer construction, the transformer/power supply T is configured to allow through a reduced number of primary and secondary coils to self-multiply the energy value demanded from the grid by the transformer T through the performance of an electro-magnetic process inside the steel core of the latter.

In greater details, the H-D primaries and the B, C secondaries of the T-transformer/power supply have a smaller number of coils than conventional power supplies, even in a ratio of one to twenty (for example, 2000 primary turns of a conventional power supply are equivalent to 100 turns in the T power supply of the invention, and 600 turns of the secondary are equivalent to 100.

Since the primary H-D of the power supply T, if of the traditional type, would not support the mains power supply due to the lack of number of coils, a load resistor that does not emit heat, R1, is connected in series to the primary H, while the resistor R2 consisting of the load of the utility Y3t is connected in series with the primary D.

Following the grid power supply of primary H, secondary B draws an alternating voltage from the grid, which alternating voltage, passing through the relative coils wound on a circular steel core, through the interposition of an electronic valve Z1 at the inlet end (b1) of the secondary itself and the interposition of an additional electronic valve Z2 at the inlet end (c1) of secondary C, has two effects.

The first effect concerns the conversion of the alternating voltage into direct current due to the unidirectional travel imposed by the Z1/Z2 valve through the output pole (+) connected to the input ends of the coils (b1, c1) of the respective secondary (B, C).

This positive energy in fact travels through the coils of the winding B / C in the direction of the output end (b2/c2), and when the latter is passed it is connected to the input end of the coil V of W2 and runs through its coils. When the relative output end of the coil V is passed, it is then connected to the input pole (-) of the valve (Z1 or Z2) to close the circuit powered by the respective secondary (B, C).

In this circumstance, the alternating voltage drawn from the grid through the secondary B, C is then converted into direct current through the unidirectional path imposed by the conversion element Z1, Z2 and the resistive closure of the circuit operated by the resistive continuity of the coil V of W2.

The second effect concerns the self-multiplication of the magnetic value of the steel core obtained through the functioning indicated above and therefore of the inductive power possessed by the secondary B, C which self-multiplies its value making it well above the value that would have been reached in a transformer according to the known technique. From the above description, it is clear that the invention has numerous and peculiar advantages over the previous state of technology, in particular in relation to the fact that it meets the safety requirements expressed by the standards in force in the sector.

The present invention has been described according to preferred embodiments, but equivalent variants can be conceived without leaving the scope of protection granted.

## Claims

1. Servo-controlled device for protecting an electric current utility (Y3) of the type comprising:
a plug (14) for connection to the device via electrical cable,
an internal resistance (R2)
a switch (X2) to activate the utility, the device comprising:
a first power circuit (Y2) arranged to be powered upstream from the electrical network (RE) and to provide power downstream to the utility (Y3) by means of a socket (13) connectable to the plug (14), comprising a disconnecting contactor (K) configured to be able to pass from a normal configuration of uncoupling and electrical disconnection of the utility (Y3) to a configuration of coupling and power supply,
a second pilot interlock circuit (Y1) which, if powered, induces and maintains said contactor (K) in the coupling and power supply state, only in response to a closing condition of said utility switch (X2), said contactor (K) returning to the uncoupling state in emergency conditions such as at least in case of a mains voltage failure, extraction of the utility plug from the socket, and shearing of the cord for the utility power supply,
wherein said second pilot interlock circuit (Y1) comprises:
a power supply transformer (T) provided with at least one primary winding (H) of a primary power winding (D) and at least one secondary (B) and one further secondary (C) for supplying the outlet (13) of the utility (Y3) active only when the respective switch (X2) is in the closure condition,
at least one first relay (W1) connected to the contactor (K) to induce, if activated in blocking, a ready state of the contactor to the coupling state,
a start button (X1) which, if actuated, induces at least one relay (W1) in a locked state and a consequent energization condition of the primary (H) of the transformer (T),
at least one second service relay (W2) powered by a secondary (B) of the transformer (T) and configured, if powered, to put in an interlocked retention state said first relay (W1) already in an energized state for the operation of the start button (X1),
at least one second pilot relay (G) powered by a secondary (C) of the transformer (T) and activatable in a state blocked by an ignition of said switch (X2) which, if activated, induces and maintains said contactor (K) in the coupling and power supply state,
at least one third relay (W3) that can be activated in bloc by pressing the start button (X1) and that is connected to the contactor (K) and to the transformer (T) and configured in such a way that, in conditions of coupling of the contactor, it determines the replacement of the primary (H) of the transformer (T) with the primary power (D) and the consequent power supply and control of the secondaries (B) and (C) of the transformer (T) and of the socket (13) said exclusion of the primary (H) determining the electrical isolation of the utility (Y3) in response to a condition of shutdown of the utility itself.

2. Device according to Claim 1 comprising a protection relay (W4) configured to cause in succession the failure of said relays (W2, W1 and G) in response to an overcurrent to the utility.

3. Device according to any of the preceding claims comprising an emergency stop button (X3) that triggers said relays (W2, W1 and G) in succession.

4. Device according to any of the preceding claims, comprising a one-way electronic valve (Z1) at the input end of the secondary (B) of the transformer configured to convert the alternating voltage into direct current through the output pole of the secondary itself.

5. Device according to any of the preceding claims, comprising a one-way electronic valve (Z2) at the input end of the secondary (C) of the transformer configured to convert the alternating voltage into direct current through the output pole of the secondary itself.

6. Electrical transformer (T) provided with at least one pilot primary winding (H) of a primary winding (H, D) and at least one secondary (B, C) further comprising at least one unidirectional electronic valve (Z1, Z2) at the input end of a secondary (B, C) of the transformer configured to convert the alternating voltage into direct current through the output pole of the secondary itself.
